# EUROPEAN PATENT APPLICATION

(11) **EP 4 005 362 A1**
(43) Date of publication of application: **01.06.2022**
(21) Application number: 20210820.5
(22) Date of filing: 30.11.2020
(51) Int. Cl.: A01C 23/00, A01C 21/00

(54) **A NITROGEN LOSS-MONITOR FOR A SLURRY TANKER**

(71) Applicant: BioCover Holding A/S, 6600 Vejen (DK)
(72) Inventor: Toft, Morten, 6600 Vejen (DK); Sørensen, Casper Toft, 6000 Kolding (DK); Madsen, Christian Toft, 8381 Tilst (DK)
(74) Representative: Patrade A/S

(57) **Abstract**

This present application relates to a method and a system for optimizing the fertilizing value of a slurry applied at an agricultural field through monitoring environmental conditions and selecting the best application conditions. This invention further relates to a system at least partly arranged on site such as carried on a tractor or a slurry tanker and which is configured to perform the optimization method by monitoring the application conditions, selecting the best application mode according to the monitored conditions, and to advise the driver of the slurry tanker on the best application mode selected by the method.

## Description

### Technical field

The present relates to a method and a system for optimizing application of slurry.

### Summary

This invention relates to a method and a system for optimizing the fertilizing value of a slurry applied at an agricultural field through monitoring environmental conditions and selecting the best application conditions. This invention further relates to a system at least partly arranged on site such as carried on a tractor or a slurry tanker and which is configured to perform the optimization method by monitoring the application conditions, selecting the best application mode according to the monitored conditions, and to advise the driver of the slurry tanker on the best application mode selected by the method.

In the early spring, when it is cold, high humidity and no wind, there may be as little as 5 % ammonia emission emitted from field applied slurry. Conversely, on a warm summer day with little humidity and high wind, 90 % of all ammonia- and ammonium may be lost as ammonia emission. This is a variation of potentially 50 kg nitrogen pr Ha, and results in yield variations. The Nitrogen utilization efficiency (NUE) can be improved in many ways, where the trend towards acidification is noticeable. Calculating and presenting the NUE on-board the tractor, will enable the driver/farm manager to make informed decisions on when to use acidification to improve the NUE when it is cost effective to do so. The system and method may further provide documentation of the NUE variability in the field to generate a variable application rate map for mineral fertilizer application to make a uniform application of fertilizers.

### Prior art

Patent US 9,532,499 B2 discloses a gas monitoring system on an agricultural implement such as a tractor or cultivator with a nutrient applicator to inject chemicals or compounds into the soil. Although the soil generally covers over the chemicals or compounds, there still may be gases released into the atmosphere. The system includes a sensor that detects the gas phase of the chemicals or compounds. The system is also set up to generate an indication when a concentration of the gas passes a threshold. If the concentration of the gas in the atmosphere is too high, an alarm may sound or flash, or the release of the chemicals or compounds is reduced or ceased. This system helps to monitor the consequence of a gravely wrong application of a slurry to a field, but this invention does not help to select the best conditions for actual application at hand.

Patent US 2017/00061052 A1 describes a system for generating digital models of nitrogen availability based on field data, weather forecast data, and models of water flow, temperature, and crop uptake of nitrogen and water is provided. In an embodiment, field data and forecast data are received by an agricultural intelligence computing system. Based on the received data, the agricultural intelligence computing system models changes in temperature of different soil layers, moisture content of different soil layers, and loss of nitrogen and water to the soil through crop uptake, leaching, denitrification, volatilization, and evapotranspiration. The agricultural intelligence computing system creates a digital model of nitrogen availability based on the temperature, moisture content, and loss models. The agricultural intelligence computing system may then send nitrogen availability data to a field manager computing device and/or use the nitrogen availability data to create notifications, recommendations, agronomic models, and/or control parameters for an application controller. This invention addresses generating digital models of nutrients available to a crop over the course of the crops development based on weather and soil data, rather than clear optimal application recommendations at the time of application of a fertilizer slurry to a field.

### Background

The contend of animal- or digested slurry is very often 95 % water with the rest consisting mostly of plant nutrients like nitrogen, phosphorus, calcium, potassium, etc. and carbon-based organic matter. Slurry is a good soil improvement source because of the organic matter and the plant nutrients stimulate plant growth. The application rate (m3/ha) is variable and often depends on nitrogen or phosphorus, with a maximum of 170 kg nitrogen pr. ha with use of slurry (EU nitrate directive). Outside of EU, application rates may be much higher. The framework conditions for slurry application is very much an umbrella that determine the equipment used and thus the application technologies used. Most framework conditions have a requirement for the slurry nitrogen utilization efficiency (NUE), very often between 60- to 85%. They are very often based on a comparison with mineral fertilizers, which have a well-established utilization efficiency of approx. 80 %. The slurry equivalent is thus often 60% to 85 % of the 80 %, leaving the actual utilization requirement at 40% to 50 %. Some countries like e.g. USA, have no NUE requirement for slurry.

An EU trend and a recent EU high court ruling against Germany, have set a new legal framework standard. The court ruling placed a demand for 20 % reduced use of nitrogen fertilizer from the economic optimum.

The reason is an application strategy of nitrogen fertilizer with slurry and mineral fertilizers that has been going on for decades and the result is a +50 mg of nitrate in the ground water underneath 40 % of German agricultural fields. +50 mg nitrate is the maximum limit set in the EU nitrate directive. The high nitrate concentration is a result of an "clustering" formation of animal husbandry. This has caused a significant surplus of nutrients in "hot spot" regions all over Europe. In the past, slurry was not valued for its nitrogen content, but rater used for its carbon source for soil improvement abilities, phosphorus, and potassium. This policy has caused major environmental problems because of nitrogen pollution.

The legal framework conditions - reducing the allowed amount of fertilizer pr. ha - is a new situation that is accelerating a marked request for a higher NUE with the use of slurry. However, there are several obstacles for doing that. The main reason for lack of improvement, is the cost of applying slurry. Slurry is often 95 % water; It is simply very expensive to transport water when the need is 20 m³ to 30 m³ pr. ha. Short distances from slurry storage to field makes transport of slurry to field feasible with the use of a slurry tanker. Most transports above 5 km distance should be done by a semi-trailer truck or a tractor based overloading slurry tanker. The lack of land for application because of clustering and the high transport cost, exceeds the fertilizer value in the slurry, resulting in an overapplication pr. ha as a means of deposition.

The result in Germany and in other EU countries, is a mandatory fertilizer accounting, where there must be a balance between nutrient input and output. The reduced fertilization with nitrogen is also expected to happen in several other EU countries. The EU CAP is under revision and the EU strategy is to introduce reduced fertilization with 20 % as part of the EU CAP strategy. The EU green deal will permit EU members to deduct requirements for environmentally sustainable praxis in the EU ha subsidy scheme. So, there will be a continued strong focus on improvement of the NUE of slurry.

The NUE can be improved in many ways, where the trend towards acidification is noticeable. This application method requires the use of sulphuric acid, which is potentially dangerous but also adds additional costs to the application. The alternative technology to acidification is injection of slurry into the soil. This technology has its drawbacks in added power requirements and small working width that requires increased work capacity. Laughter gas (N₂O) emission is also increased by use of injection technology and this technology could be deemed as a non-sustainable because of climate gas increase.

The target for acidification is to limit the emission losses of ammonia nitrogen. This will significantly increase the NUE. Ammonia is a gas form, and it is extremely volatile depending on application technology and climate/weather conditions. In the early spring, when it is cold, high humidity and no wind, there may be as little as 5 % ammonia emission. Conversely, on a warm summer day with little humidity and high wind, 90 % of all ammonia- and ammonium may be lost as ammonia emission. The acidification technology may reduce the ammonia emission 50 % to 70 % in both scenarios, but with a considerable different effect on kg of plant available nitrogen saved as a result. The profitability of increasing the NUE is thus depending on many factors and a considerable experience in when to apply the technology is required. To measure the NUE is thus key to know when to apply the acidification technology. This can be expressed as either a % loss of nitrogen or as a kg N pr. ha.

This is possible with the oncoming of precision agriculture and GPRS variable rate technology. Precision agriculture is based on measurements of variability in the field and correcting it by adjusting the farm inputs like nitrogen. It has so far been 30 years in the making with only a limited success. This is mainly due to climate factors, often accounting for 70 % of the variability so it is often a limited value to variable application rates compared to uniform application rates. Slurry has the additional problem of the lower NUE compared with mineral fertilizer, that is caused predominantly by climate variations like wind speed, rain, and temperature.

With a need for increasing the NUE, the animal slurry is a priority because of the current low NUE. By splitting the applications (i.e. using two or more applications instead of a single application), it is possible to adjust the dose rate according to plant growth need and with the application closer to plant nitrogen uptake, there is less risk of nitrogen leaching to the ground water caused by heavy rainfall. This is currently best practice but used mostly with mineral fertilizers. This may result in increasing the number of applications with less nitrogen pr. application of both mineral- and organic (slurry) fertilizers in a season. Mineral fertilizers may also be used in combination with slurry to reduce some of the in-field traffic. It is common to start with a mineral dose rate of 25- to 50 kg in February/March and proceed with the main slurry application of 120 - 170 kg nitrogen in early Marts and finish with a late mineral fertilizer application in of 10 - 30 kg in April.

### Description of the invention

These and other issues may be addressed by a system and a method for optimizing nitrogen utilization efficiency (NUE) from digested- or animal slurry by providing a real time nitrogen utilization efficiency (RTNUE) calculation based on application data from digested- or animal slurry at least during application, said method comprising the steps of:
- Collecting base data preferably while applying slurry to a field, the base data comprising slurry application rate, GPRS positioning system, slurry pH, duration of emission time, PTO, tank size, application/spreading technology, working width, overlaps, gaps, slurry temperature and/or soil quality map, as background data for calculating the nitrogen utilization efficiency
- Collecting site specific data related to site specific conditions for estimating the nitrogen utilization efficiency and /or variations in nitrogen utilization efficiency, the site specific data comprising temperature, wind speed and direction, air moisture content and/or rainfall
- Collecting nutrition data related to slurry nutrient content for estimating the nitrogen utilization efficiency and/or variations in nitrogen utilization efficiency, the nutrition data comprising ammonium content, dry-matter, total available nitrogen, phosphorus and/or potassium
- Calculating the RTNUE based on a combination of at least the base data, site specific data and nutrition data in a model, and
- providing the real time nitrogen utilization efficiency (RTNUE) data on-site such as onboard a slurry application vehicle/slurry tanker.
   I.e. by the present invention is provided a system and method which enables the optimization of the NUE based on a number of input including type of slurry, application patterns, weather conditions, soil and terrain information as each of these factors may be relevant for calculation a real time prediction of NUE and a preferably a suggested optimized application data set.

With the method and system provided herein, it is possible to model the NUE when applying the slurry and display or otherwise provide the information for example via an onboard slurry tanker terminal, a separate display or user panel. This will enable the driver/farm manager to make informed decisions for example on when to use acidification to improve the NUE and when it is cost effective to do so.

As described in the following each of the mentioned parameters may be important in providing information which is directly applicable in form of direct instructions on when, how and also where to apply slurry.

Slurry application is subject to a substantial emission of ammonia gas. Depending on the climate conditions at the time of application and the application equipment used, it may vary from 5 % to 90 % of total ammonium N content. An average of NUE around 40 % compared to NUE of 80% with mineral fertilizers is common.

This emission process is very well documented by several universities e.g. Aarhus university. The emission problem is reduced with the use of acidification that transforms the ammonia (NH3) gas to ammonium (NH4) salt. Test have shown to reduce the emissions between 50 % to 70 %, but it cannot be eliminated. Without acidification and with a target NUE of commonly 40 % and 170 kg nitrogen pr. ha, this is a loss of approx. 100 kg nitrogen/ha. This can be reduced to 75 kg by use of acidification. No matter the application technology, with- or without acidification, it is possible to monitor the emission rate during- and after slurry application.

Some important factors influencing the emissions are:
Internet based- or local weather station:
   - Air Temperature - from point of application and the following 2-3 days
   - Temperature of the slurry
   - Wind speed- from point of application and the following 2-3 days
   - Wind direction during application- from point of application and the following 2-3 days
   - Air humidity- from point of application and the following 2-3 days
   - Soil quality
   - Soil topography
Information from the slurry tanker
   - Application technique
   - Nitrogen kg N/m³ - as NH₄ and total N. Data collected through NIR Sensor, NMSRS, chemical laboratory analysis or normed estimate from extension services
   - Volume of slurry recorded over time
   - pH of slurry
   - GPRS Position of the applied slurry

With above data, the emission rates can be calculated using all- or a combination of above climate data- and knowledge about the slurry and the application technique. Various methods may be used to provide the calculated NUE. For example, the Alfam model contains +4000 ammonia emission trails. With the measured climate data, slurry nutrient data and slurry tanker data, it selects the measured trail data that corresponds to the measured data and displays the measured NUE

Based on this the present method and system may provide the operator a very good indication of the current emission and how it develops over the day/ time. In the ideal world, the climate data for the comparison preferably have a duration of min. 24 hours after application as the emissions may continue up to 3 days after application and rainfall can lead a significant variation in emmision. The more data sets in the database and accurate data from the application, the more precise the estimates will be. It may however not always be necessary to have all above time/data in order to get a good idea of the emission rate but data from air temperature and wind speed are in most cases essential for an accurate estimate, combined with slurry volume pr. area unit, nitrogen content in the slurry, slurry application technique and GPS position.

The contents of nitrogen in the slurry is ideally measured pr. slurry storage tank or pr. slurry tanker load with an on-bord NIR or NMRS scanner. This way it may be automatically stored in the dataset pr. field and the operator is not asked to enter data he may not know. If the data is not available from a sensor, they can for example be available as a sample analysis from the barn or storage. If it is digested slurry, it is may be readily available as analysis usually is delivered by the biogas plant. Finally, the nitrogen content can be found in the normative figures that are available from extension services and can be added to the data set for example on board the slurry tanker. These data are preferably available in the slurry tanker terminal system as a minimum requirement for information.

As the ammonium is water solvent, it is not likely to vary much pr. slurry tanker load, but the dry matter also holds nitrogen and that may vary considerably from start to stop. Especially with pig slurry, there is pronounced tendency for the dry matter to sediment and if the storage tank is not stirred during the application period, it can lead to a difference of 30 to 50 % dry matter from beginning to end. It is preferred to map this effect because it can create significant differences in the phosphorus application rates that may need to be considered in later phosphorus applications and soil analysis strategies.

The model (preferably Alfam model) calculated emission rates may be site specific, as the climate variations over a day or per slurry application can vary considerably and change the potential NUE within a field. When the variations in the emissions can be calculated and documented, a variable digital application map can be produced and areas with an insufficient NUE can be identified. During any subsequent nitrogen application, these areas can receive a higher dose rate to correct for the emission loss. This will result in much less yield variations and an average higher yield. Actual "as applied maps" may be provided by the present system and method. Furthermore, the system and method may provide maps for optimized subsequent application of further slurry and/or minerals as described later.

Local climate/weather data are often important, even at a sub-field level. With internet-based weather information systems, localized climate data systems are numerous and easy to access. Also, systems for real time local weather data are spreading rapidly. All these systems can serve to supply information on the emission of the slurry emission on a given day.

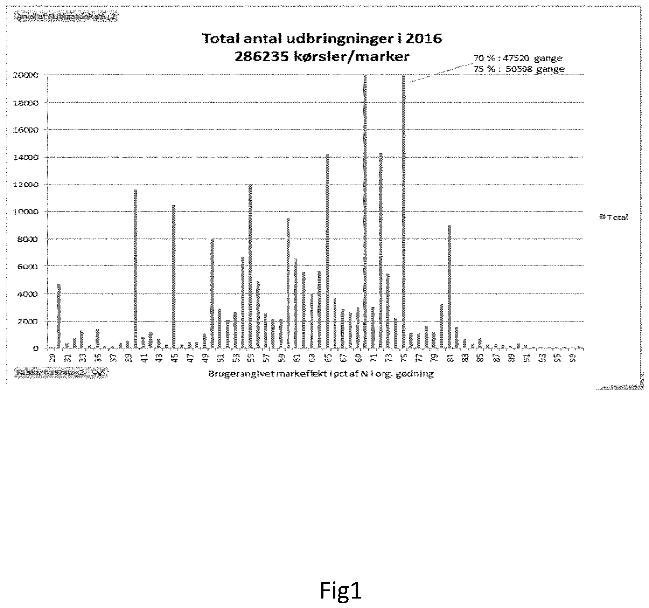

The reported NUE for slurry in Denmark in 2016 (fig 1) varied from 25 % to 91 % with many farmers reporting their efficiency close to the legal framework requirement of 70 % to 75%. It also shows a huge majority using "round" numbers, caused by little feedback from the actual emissions of a given application.

The real gamechanger in total NUE pr. day, may be a rain shower. This may not stop the slurry application with only a few mm. of rain, but it does change the dynamics of emissions very significantly. In fact, emissions levels may be 80 % one minute, and it can be reduced to below 5 % the next. With an EU nitrate directive maximum of 170 kg nitrogen slurry applied pr ha, this is NUE variation from 34 kg one moment to 170 kg applied the next. Most of the losses caused by emission, is usually done within 4 to 8 hours after application. A normal working day for slurry application is often 16 hours. That means that significant variations in slurry NUE can be caused by climate variations during a normal working day whereby the present method and system can be advantageously applied to optimize the nitrogen application.

Climate data may be provided to the present system and method from the internet- or online from a local weather station. In combination or alternatively he slurry tanker may have its own weather station fitted to record a complete set of data for example as a rain shower, wind or temperature conditions can be extremely local.

Slurry liquid may penetrate the soil at different speeds because of soil type and water saturation. Sandy soils are distinctively quicker at absorbing the slurry liquid than clay soils. Since the ammonium nitrogen in slurry liquid is water solvable, it follows the liquid fraction of the slurry and penetrates the soil. After penetration, it binds itself to the soil colloids and the fertilization application process is over. Agricultural fields are composed of many different soil qualities. Because of that, it can be important to know the variations to estimate the variations in penetration time, as an increase in liquid slurry fraction exposure to climate surface conditions may increase the emission rate. Soil quality maps/data may be available on the internet and used in various embodiments of the present system and method.

Emission rates may also be influenced by field inclinations. When the slurry is fermented in a digester, its viscosity increases and becomes very much like water. That increases the risk of surface run-off. Not necessary run-off from the field, but movement of the slurry within the field with the result being uneven distribution of the fertilizers. The soil topography maps can be important for estimates of slurry emissions and especially in combination with slurry viscosity and volume, it may constitute an important source of information on emission variations and NUE provided by the present system and method.

A slurry tanker means a combination of a tractor and slurry tanker or a self-propelled unit. When a slurry tanker has acidification technology installed, the pH is known. If the slurry tanker has a NIR sensor or an NMRS scanner, the nitrogen contend is precisely identified. Volume of slurry is very accurately measured from a flow sensor or less accurate from the slurry pump. Position of the slurry tanker is identified through GPRS position and it is standard through the need for operating the slurry tanker precisely and documentation of the slurry application site. In the set-up of a job, the driver is asked to identify the application type he is using.

The average emission can in some embodiments be statistically processed to make sure that it represents the known variations without risk of false data interpretations. The site-specific data sets can also be "cleaned" of abnormalities through algorithms that compare climatic data at a given site to verify that the local emission variations are plausible and give credibility to the site-specific application maps.

Deposition of ammonia may also influence the nitrogen dose rate and utilization efficiency and thus data relevant for this may be provided to and/or processed by the present method and system. The reason ammonia escapes into our atmosphere, is an imbalance between the concentration in the slurry and in the air. This imbalance will always seek to even itself out and so the more turbulence there is (wind), high temperature and the broader the surface area of the slurry (application technique) - the higher the emission rate. When the ammonia has escaped the slurry into the air, it has little or no effect on total deposition on the area where slurry has been applied as it will be rejected by the imbalance. First, when it exceeds the slurry application boundary, it may find a place for deposition. The first recommendation to decrease emission losses, is to apply slurry downwind. The ammonia emission deposition rate is based on air concentration contra surface concentration so just outside the application boundary, the deposition is high because of a high air concentration and low surface concentration. As concentration dilutes over distance the deposition pr area unit lowers. As a result, ammonia emission has a high impact on local biodiversity downwind of the application area and may cause air pollution more than 1000 km away. When the emission rate is known, it is possible to identify the deposition area through the wind speed- and wind direction. This is typically a few kg /ha, but it may be 5-7 kg/ha with less favorable emission conditions.

Splitting the applications in to two or more applications present an opportunity for increasing the overall NUE using the "slurry As applied map" generated by the method and system according to the present invention to generate an application map for mineral fertilizer thereby further optimizing the application of mineral fertilizer. Slurry applications have a set of parameters not seen by other farm equipment. Its working distance pr. tank/application run is set by working width, tank size and slurry application rate pr. ha. A normal application distance for a 20m3 slurry tanker is somewhere between 100m to 1000m covering around 0.5 ha. to 1 ha.

This is a very short working area seen from an agricultural viewpoint. Most capacitated application equipment can work +10 ha before re-filling and covers much more area in the same amount of time. Slurry application with a tractor pulled slurry tanker has to travel to a specific slurry tank outside of the field to re-fill thus spending about 2/3 of the time outside of the field. One field of 10ha may take a full working day to finish if more than 5km away from the tank. The NUE changes during the day, if applied in high sun midday the utilization will be lower than if applied early morning or afternoon. The difference in NUE over the day and thus yield potential, could be uniformed using a variable rate mineral fertilizer application map.

In many countries, documentation for slurry application is becoming the norm. Precision agriculture has made it easy to monitor the application of slurry down to m² accuracy. By using precision agriculture GPRS monitoring, the variations in slurry application can be seen in an "as applied map". With knowledge of the slurry nitrogen contend, it is possible to quantify the NUE pr. individual tramline/area unit in the field. This can then automatically be transferred into an application map for a mineral fertilizer application that can remedy the variations introduced by the slurry tanker application and potentially lead to significant yield increases.

Thus, according to the present invention is provided a method and a system, which enables an optimized utilization of the nutrition and especially nitrogen in applied slurry.

In various embodiments the calculated RTNUE data are provided in the form of nitrogen utilization efficiency in % and/or weight comparison of nitrogen between
- slurry band spreading and the use of band spreading- and acidification, and/or
- slurry dragging shoe application and/or the use of dragging shoe application and acidification

By this, automatic or manual adjustment of relevant parameters such as increased/decreased acidification by e.g. addition of sulphuric acid or application technique such as slurry band spreading or slurry dragging shoe application can be carried out based on the provided information.

When the NUE is provided not only as a forecast but as regularly updated, preferably real time, information (RTNUE) based at least partly on site specific data, such as current on site changes in temperature or wind conditions, it is possible for a user to modify the application strategy on site and during application.

For example the system and method may provide the RTNUE showing a 20% NUE with regular band application and a 65% NUE with a specific degree of added acidification allowing the user or system to adapt to optimize NUE without increasing the cost related to acid consumption to a level above what is viable.

Similarly, summarizing a difference in nitrogen utilization efficiency expressed in cumulation % and/or in cumulation of weight total nitrogen obtained from the calculated RTNUE data between conventional slurry application and slurry application with acidification pr. Job, pr. year and / or pr. system lifetime can provide a valuable insight into overall difference between actual and ideally achievable NUE and/or weight total Nitrogen.

The system and method may provide information on how much nitrogen is actually applied (i.e. not lost to emission) and/or how much nitrogen is lost due to emission when providing the NUE

In various embodiments the system and method are used for generating and/or displaying one or more maps based on the RTNUE, base data, site specific data and/or nutrition data. Said maps may for example be:
slurry as applied map showing overlap and gaps in the application field
dry-matter as applied map,
2^{nd} year nitrogen digital variable rate map as overlay for a first year nitrogen application map.
nitrogen utilization efficiency map,
map of Nitrogen: Phosphorus (N:P) slurry application ratio, and/or variable rate application map for nutrition elements such as nitrogen, phosphorus, Sulphur and / or potassium

In other embodiments it may be relevant to process the RTNUE data with one or more inclination maps thereby achieving a run-off risk map. This may be highly relevant where there are inclinations above 1%, 2%, 3%, 4%, 5% or even higher such as above 6% or higher such as above 8%. The need for evaluating and/or forecasting application of slurry in relation to inclination of the fields may for example be at least partly regulated by local or regional environmental laws.

Other options may be a map of contribution margin loss from nitrogen utilization efficiency, wherein the map contains a summarizing of the contribution margin loss pr job and/or pr season.

Or a map of local ammonia emission deposition to adjacent fields and/or a variable rate application map for fertilizers.

Calculating and providing the Green House Gas emission reduction effect from the optimized slurry application for example with documentation to be used for issue of CO₂ carbon credits may be of increasing relevance. The present method and invention not only provide highly developed tools for the user to control, plan and/or monitor the use of available resources with a direct economical perspective, it also provides important data and enables action regarding environmental responsibilities, compliance and future optimal and responsible applications.

At least the base data may be used to produce a nitrogen utilization efficiency forecast which may be used to manually or automatically plan applications or even decide on when to carry out an application.

The present method and system may be used on site for example on board in a slurry application vehicle to provide at least the RTNUE but also other highly important data. System may for example comprise an on-site devise with regularly updated information. The devise preferably comprise means such as an interface for the user to interact with the system. The system can also comprise one or more remote devices for storing, receiving and/or processing data and information according to the method described herein.

Site specific data may be provided by e.g. known sources for weather information, but may in several embodiments be provided by one or more on-site sensors such as sensors located at relevant points in or around a field or even at the slurry application vehicle. When information about wind, temperature, moisture in the air etc are recorded and/or stored at the time and site of the application, highly accurate and detail RTNUE data and/or maps as described above can be generated and provided by the present method and system.

These RTNUE data and/or maps may be used for planning future applications of slurry and/or e.g. alternative fertilizers. The data and maps may be used to plan within a single year but may also be used to optimize gains from the fields and minimize negative environmental impact over several years thereby enabling long term optimization, planning and compliance.

Even though the main focus in the present is optimization of NUE several other advantages may be achieved by the present method and system. For example similar optimization of S and/or P consumption and application can be achieved.

The system and method may comprise means for using satellite imagery for canopy growth to calibrate for nitrogen use efficiency.

The system comprises:
- Data collecting means, such as sensors, means for automatic or manual input of data tables and/or means for receiving online data such as weather data.
- Data processing means which may be found on site and/or remote and/or in a portable device such as a tablet, onboard terminal or mobile phone.
- Means for sending/receiving information such as Wi-Fi, gps, telephone, internet and/or cloud technology.
- Means for providing at least the calculated RTNUE for example in the form of an integrated screen, speaker and/or mobile device.

Preferably the system also comprises a user interface which is available on site. The user interface may be used to visually track optimal NUE performance and also for example allow the user to manually adjust the application accordingly and/or oversee automatic adjustment of the application based on the provided RTNUE data.

The system may be arranged with means for generating and/or providing one or more maps based on the base data, on site data, nutrition date. For example an on-site part of the system may be used to gather, store and/or transmit data specific to time, place and application settings which may be used to generate maps of how much nitrogen, Sulphur, phosphor has been applied where on a field.

The system may comprise means for providing a forecast and/or a suggested application strategy based on one or more of base data, on site data, nutrition data and/or at least one of the provided maps. For example, visual maps can be generated and provided allowing a user to evaluate one or more applications one by one or as overlapping maps of multiple applications. The maps may also be provided as transferable data and/or reports for planning future application and/or as documentation for authorities to prove compliance to environmental regulations.

The system may comprise one or more ammonia sensors positioned downwind on adjacent fields.

The value of the system is not limited to fertilizer planning and follow-up. When the method and system is active, it may measure- and gather all the needed- or available data. It is thus aware of all the slurry tanker data and the current climate data. This gives the system an on-line ability to show the driver his estimated emission % and kg losses and he can monitor this as his workday proceeds. This information can be used for decisions for example on whether to stop / go if the emission increases over a certain threshold. The NUE becomes a very important information in a nitrogen quota limiting scenario as the lost nitrogen may not be replaced by additional purchases or applications of nitrogen.

To pause an agricultural logistic chain that has been set into motion - like slurry application - is expensive around 160 €/hr. in lost net income for contractors. This means that it may be more beneficial if the system is used together with a weather forecast. The weather forecast may also provide the climate data that enables an estimate on NUE. This may influence decisions for proceeding activities -for instance on whether to continue until late to finish a job- or whether to expect to continue the following day.
Fig. 1 data on number of applications in DK in 2016
Fig 2: Simplified diagram of input and output from the present method and system

### Detailed description of the invention

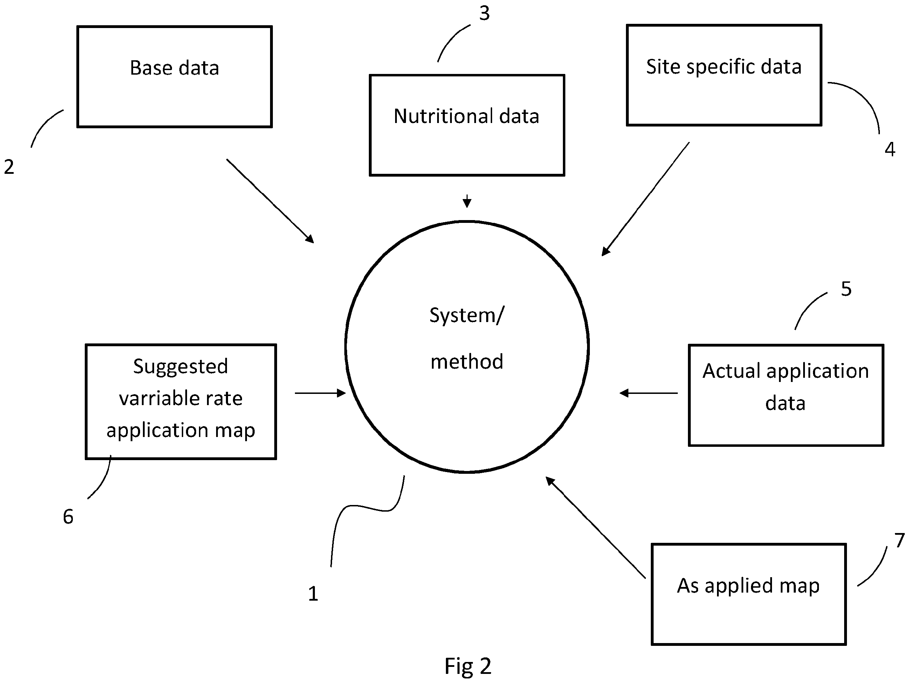

As illustrated in figure 2 the method and system 1 collects and processes at least base data 2, nutritional data 3 and site specific data 4 and processes these to provide RTNUE The system and method preferably records and stores actual application data 5 which together with the other data may form the basis for several types of maps such as variable rate application maps 6.

The system and method may also provide and be provided with e.g. data in form of a "slurry as applied" map 7.

Thus, a slurry nitrogen loss monitor system and method for a slurry tanker according to the present invention advantageously may monitor many parameters regarding the slurry application to calculate the slurry application related ammonia emission. These data can be supplied by nutrient data of the slurry and climate data. The combined data can be used to monitor the nitrogen utilization efficiency (NUE) of the slurry.

With the future EU green deal sub-optimal requirement to the use of nitrogen, the ability to monitor- and forecast the NUE will become a very important management decision tool to maximize the yield potential of all crops / fields.

Said system comprises software, electronic hardware, and sensors to monitor the performance and position of a slurry tanker. The basic system monitors how the mosaic of slurry application paths are distributed within. While performing slurry application it informs the slurry tanker driver of the NUE status and may compare conventional application with acidification technology to optimize the use of conventional application with acidification technologies to optimize the NUE

The full version of the invention contains all data recordings needed to deliver an accurate calculation of the NUE. This includes variations in the natural volatility of the slurry over the application period. These data can be transmitted to the cloud for further optimizing the data into a variable rate application map for fertilizers based on the variable NUE

The introduced variations and the natural climate/weather variations can be combined in a dataset to create an NUE variation map or a site-specific application map which may be used with a further e.g. a 2^{nd}- and/or final application of nitrogen for example in form of slurry or mineral.

The invention can also be used to forecast the NUE based on weather forecasts and knowledge of the nutrient content of the slurry.

## Claims

1. A method for optimizing nitrogen utilization efficiency (NUE) from digested- or animal slurry by providing real time nitrogen utilization efficiency (RTNUE) data based on data from digested- or animal slurry during application, said method comprising the steps of:
- Collecting base data at least while applying slurry to a field, the base data comprising any of: slurry application rate, GPRS positioning system data, slurry pH, duration of emission time, PTO, tank size, application/spreading technology, working width, overlaps, gaps, slurry temperature and/or soil quality map, as background data for calculating the nitrogen utilization efficiency
- Collecting site specific data related to site specific conditions for estimating the nitrogen utilization efficiency and /or variations in nitrogen utilization efficiency, the site specific data comprising any of: temperature, wind speed and direction, air moisture content and/or rainfall
- Collecting nutrition data related to slurry nutrient content for estimating the nitrogen utilization efficiency and/or variations in nitrogen utilization efficiency, the nutrition data comprising any of: ammonium content, dry-matter, total available nitrogen, phosphorus and/or potassium
- Calculating the RTNUE based on a combination of at least the base data, site specific data and nutrition data in a model, and
- providing the real time nitrogen utilization efficiency (RTNUE) on-site.

2. The method according to claim 1, comprising the step of providing the calculated RTNUE data in the form of nitrogen utilization efficiency % and/or weight comparison of nitrogen between
- slurry band spreading and the use of slurry band spreading with acidification, and/or
- slurry dragging shoe application and the use of slurry dragging shoe application with acidification.

3. Method according to claims 1 or 2 comprising the step of summarizing a difference in nitrogen utilization efficiency expressed in cumulation % and/or in cumulation of weight total nitrogen obtained from the calculated RTNUE data between conventional slurry application and slurry application with acidification pr. Job, pr. year and / or pr. system lifetime.

4. Method according to any of the claims 1 - 3, comprising the step of generating one or more maps based on the RTNUE, base data, site specific data and/or nutrition data:
- slurry as applied map showing overlap and gaps in the application field
- dry-matter as applied map,
- 2^{nd} year nitrogen digital variable rate map as overlay for a first year nitrogen application map,
- nitrogen utilization efficiency map,
- map of Nitrogen: Phosphorus (N:P) slurry application ratio, and/or
- variable rate application map for elements such as nitrogen, phosphorus, sulphur and / or potassium.

5. Method according to any of the claims 1 - 4 comprising the step of processing the RTNUE data with an inclination maps thereby achieving a run-off risk map.

6. Method according to any of the claims 1 - 5, comprising the step of producing a map of contribution margin loss from nitrogen utilization efficiency, wherein the map contains a summarizing of the contribution margin loss pr job and/or pr season.

7. Method according to any of the claims 1 - 6 comprising the step of producing a map of local ammonia emission deposition to adjacent fields and/or a variable rate application map for fertilizers.

8. Method according to any of the claims 1 - 7, comprising the step of calculating the Green House Gas emission reduction effect from the optimized slurry application and optionally providing documentation to be used for issue of CO₂ carbon credits.

9. Method according to any of the claims 1 - 8, wherein at least the base data is used to produce a nitrogen utilization efficiency forecast.

10. Method wherein any of the method steps according to claims 1- 9 are carried out on a cloud based communication system.

11. A system for collecting, processing and displaying data according to the method in any of the claims 1 - 10, in order to at least provide a RTNUE value, said system comprising
- Data collecting means
- Data processing means
- Means for sending/receiving information
- Means for providing at least the calculated RTNUE on site.

12. System according to claim 11, comprising a user interface which is available on site, such as onboard a slurry tanker.

13. System according to claim 11 or 12, comprising means for generating and/or providing one or more maps based on the base data, on site data, nutrition date.

14. System according to any of the claims 11 - 13, comprising means for providing a forecast and/or a suggested application strategy based on one or more of base the data, on site data, nutrition date and/or at least one the provided maps.

15. System according to any of the claims 1 - 14, arranged to provide the calculated RTNUE data in the form of a comparison of nitrogen utilization efficiency in % and/or weight of applied nitrogen between conventional application and one or more alternative applications such as application with acidification, thereby enabling the optimization of nitrogen utilization efficiency (NUE) from digested- or animal slurry.
